(19) Europäisches Patentamt
European Patent Office
Office européen des brevets

(11) **EP 4 722 311 A1**

(12) **EUROPEAN PATENT APPLICATION**

(43) Date of publication:
**08.04.2026 Bulletin 2026/15**

(21) Application number: **25206796.2**

(22) Date of filing: **06.10.2025**

(51) International Patent Classification (IPC):
*C09D 11/38* (2014.01)   *C09D 11/322* (2014.01)
*C09D 11/326* (2014.01)   *C09D 11/107* (2014.01)

(52) Cooperative Patent Classification (CPC):
**C09D 11/38; C09D 11/107; C09D 11/322;
C09D 11/326**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.10.2024 JP 2024176094**

(71) Applicant: **KYOCERA Document Solutions Inc.
Osaka-shi, Osaka 540-8585 (JP)**

(72) Inventors:
• **TSUCHIHASHI, Kazuki
Osaka-shi, Osaka, 540-8585 (JP)**
• **KITAGAWA, Sayaka
Osaka-shi, Osaka, 540-8585 (JP)**
• **KIHARA, Yu
Osaka-shi, Osaka, 540-8585 (JP)**

(74) Representative: **Viering, Jentschura & Partner
mbB
Patent- und Rechtsanwälte
Grillparzerstraße 14
81675 München (DE)**

(54) **INKJET INK**

(57) An inkjet ink includes: a pigment; 3-methyl-1,5-pentanediol; triethylene glycol monobutyl ether; trimethylolpropane; a pigment dispersion resin; and water.

**Description**

**Field**

The present disclosure relates to an inkjet ink.

**Background**

In inkjet recording apparatuses, the contact area between ink and the atmosphere increases near the ejection surface of the recording head in which nozzles are disposed, making the ink more likely to dry. For this reason, in the ink present near the ejection surface, the pigment is more likely to agglomerate due to the increase in concentration of the water-soluble organic solvent as the drying progresses. As a result, in inkjet recording apparatuses, nozzle clogging in the recording head is more likely to occur.

Japanese Patent Application Laid-open No. 2019-001907, Japanese Patent Application Laid-open No. 2019-019161, and Japanese Patent Application Laid-open No. 2022-153876 disclose a technology in which a moisturizing agent is blended in an ink in order to suppress the progress of drying of the ink. In the ink disclosed in Japanese Patent Application Laid-open No. 2019-001907, diethylene glycol-2-ethylhexylan ether or the like is blended as a moisturizing agent. In the ink disclosed in Japanese Patent Application Laid-open No. 2019-019161, glycerin or the like is blended as a moisturizing agent. In the ink disclosed in Japanese Patent Application Laid-open No. 2022-153876, glycerin and trimethylolpropane are blended as moisturizing agents.

**Summary**

According to an embodiment of the present disclosure, there is provided an inkjet ink, including: a pigment; 3-methyl-1,5-pentanediol; triethylene glycol monobutyl ether; trimethylolpropane; a pigment dispersion resin; and water.

**Detailed Description**

Since diethylene glycol-2-ethylhexylan ether used as a moisturizing agent in Japanese Patent Application Laid-open No. 2019-001907 has high hydrophobicity, it is difficult to blend an amount that is capable of sufficiently suppressing the progress of drying of the ink for a long period of time. Further, glycerin and trimethylolpropane, which are used as moisturizing agents in Japanese Patent Application Laid-open No. 2019-019161 and Japanese Patent Application Laid-open No. 2022-153876, are also difficult to sufficiently suppress the progress of drying of the ink present near the ejection surface by only their moisturizing properties.

In view of the circumstances as described above, it is an object of the present disclosure to improve ejection stability of an inkjet ink.

An embodiment of the present disclosure will be described. Note that in the present disclosure, "acrylic" and "methacrylic" will be collectively referred to as "(meth)acrylic", i.e., "(meth)acrylic" includes both "acrylic" and "methacrylic".

[Configuration of inkjet ink]

(Schematic configuration)

An inkjet ink according to an embodiment of the present disclosure (hereinafter, referred to simply also as an "ink") includes a pigment a, a water-soluble organic solvent b, a moisturizing agent c, a pigment dispersion resin d, and water. The ink according to this embodiment is a water-based ink that is ejected onto a recording medium from a recording head of an inkjet recording apparatus to form an image on the recording medium.

Examples of the recording medium on which an image is formed with the ink according to this embodiment include a permeable recording medium and a non-permeable recording medium. The ink according to this embodiment is suitable for forming an image on a permeable recording medium having excellent permeability of inks. Examples of the permeable recording medium include printing paper and a medium using a fiber as a raw material (e.g., a fabric). Examples of the printing paper include plain paper, copy paper, recycled paper, thin paper, thick paper, and glossy paper.

In the ink according to this embodiment, 3-methyl-1,5-pentanediol and triethylene glycol monobutyl ether are used as the water-soluble organic solvent b, and trimethylolpropane is used as the moisturizing agent c. In the ink according to this embodiment, the effects of the water-soluble organic solvent b, the moisturizing agent c, and the pigment dispersion resin d achieve high ejection stability. Details of each component of the ink according to this embodiment will be described below.

(Pigment a)

In the ink according to this embodiment, for example, a yellow pigment, an orange pigment, a red pigment, a blue pigment, a purple pigment, or a black pigment can be used as the pigment a. Examples of the yellow pigment include C.I. Pigment Yellow 74, 93, 95, 109, 110, 120, 128, 138, 139, 151, 154, 155, 173, 180, 185, or 193. Examples of the orange pigment include C.I. Pigment Orange 34, 36, 43, 61, 63, or 71. Examples of the red pigment include C.I. Pigment Red 122 or 202. Examples of the blue pigment include C.I. Pigment Blue 15 or 15:3. Examples of the purple pigment include C.I. Pigment Violet 19, 23, or 33. Examples of the black pigment include C.I. Pigment Black 7. In the ink according to this embodiment, the content of the pigment a is favorably 3.0 mass% or more and 20.0 mass% or less, more favorably 7.0 mass% or more and 12.0 mass% or less.

(Water-soluble organic solvent b)

The ink according to this embodiment includes 3-methyl-1,5-pentanediol and triethylene glycol monobutyl ether as the water-soluble organic solvent b. In the ink according to this embodiment, the sum of the content of 3-methyl-1,5-pentanediol and the content of triethylene glycol monobutyl ether is 20 mass% or more from the viewpoint of achieving high image density in the image formed on the recording medium. Further, in the ink according to this embodiment, the sum of the content of 3-methyl-1,5-pentanediol and the content of triethylene glycol monobutyl ether is 40 mass% or less from the viewpoint of suppressing the agglomeration of pigments.

(Moisturizing agent c)

The ink according to this embodiment includes trimethylolpropane as the moisturizing agent c. Trimethylolpropane has a structure similar to that of glycerin that is well known as a high-performance moisturizing agent, and therefore exhibits moisturizing properties equivalent to those of glycerin. Further, since trimethylolpropane has a carbon chain longer than that of glycerin, hydrophobic interactions occur between 3-methyl-1,5-pentanediol and triethylene glycol monobutyl ether constituting the water-soluble organic solvent b having a relatively long carbon chain, and trimethylolpropane. For this reason, in the ink according to this embodiment, trimethylolpropane constituting the moisturizing agent c suppresses the evaporation of the water-soluble organic solvent b by their high water retention properties as well as the hydrophobic interactions occurring between trimethylolpropane and the water-soluble organic solvent b. As a result, in the inkjet ink according to this embodiment, the agglomeration of the pigment a is effectively suppressed even if the ink is present near the ejection surface of the recording head, and therefore, favorable ejection stability can be achieved.
In the ink according to this embodiment, the content of trimethylolpropane is favorably 1.0 mass% or more in order to sufficiently achieve the above effect of trimethylolpropane. Further, in the ink according to this embodiment, the content of trimethylolpropane is favorably 10 mass% or less in order to prevent the ink from being outside of the appropriate viscosity range.

(Pigment dispersion resin d)

In the ink according to this embodiment, the pigment dispersion resin d for enhancing the dispersibility of the pigment a in the solvent is blended. The pigment dispersion resin d is fine particles of a resin and is adsorbed on the surface of the pigment a to suppress the agglomeration of the pigment a. In the ink in which the pigment dispersion resin d is blended, the pigment a and the pigment dispersion resin d integrally constitute a pigment dispersion. The pigment dispersion includes, for example, a core including the pigment a and the pigment dispersion resin d coating the core. Part of the pigment dispersion resin d may be dispersed in the solvent without being adsorbed on the surface of the pigment a.
As the pigment dispersion resin d, a known pigment dispersion resin can be appropriately selected and used. The pigment dispersion resin d may be a random polymer or a block polymer. Specific examples of the pigment dispersion resin d include polyester, polyurethane, (meth)acrylic acid, a styrene-(meth)acrylic acid copolymer, a styrene-maleic acid copolymer, a styrene-maleic acid half ester copolymer, a vinyl naphthalene-(meth)acrylic acid copolymer, and a vinyl naphthalene-maleic acid copolymer. The styrene-(meth)acrylic acid copolymer is a resin including a unit derived from styrene and a unit derived from (meth)acrylic acid, (meth)acrylic acid ester, or methacrylic acid ester. Examples of the styrene-(meth)acrylic acid copolymer include a styrene-(meth)acrylic acid-(meth)acrylic acid alkyl ester copolymer, a styrene-methacrylic acid-methacrylic acid alkyl ester-(meth)acrylic acid alkyl ester copolymer, a styrene-(meth)acrylic acid copolymer, a styrene-maleic acid-(meth)acrylic acid alkyl ester copolymer, a styrene-methacrylic acid copolymer, or a styrene-methacrylic acid alkyl ester copolymer. Of these pigment dispersion resins, a styrene-(meth)acrylic acid copolymer is favorable, a styrene-methacrylic acid-methacrylic acid alkyl ester-(meth)acrylic acid alkyl ester copolymer is more favorable, and a styrene-methacrylic acid-methyl methacrylate-butyl (meth)acrylate copolymer is still more favorable because they are easily prepared and have an excellent effect of dispersing the pigment a.

The pigment dispersion resin d favorably has a neutralization rate of 20% or more and 100% or less, more favorably 30% or more and 60% or less. Note that the neutralization rate of the pigment dispersion resin d is obtained as the percentage (100 × (MB/MA)) of a usage amount MB to a theoretical value MA, MA indicating the theoretical value of the amount of the basic compound necessary for completely neutralizing the pigment dispersion resin d, MB indicating the actual usage amount of the basic compound in the dispersion step.

The pigment dispersion resin d favorably has an acid value of 50 mg KOH/g or more and 300 mg KOH/g or less, more favorably 75 mg KOH/g or more and 275 mg KOH/g or less. By setting the acid value of the pigment dispersion resin d to 50 mg KOH/g or more, the cross-linking by the cross-linking agent described below can be easily performed. By setting the acid value of the pigment dispersion resin d to 300 mg KOH/g or less, it is possible to achieve high preservation stability in the ink according to this embodiment. Note that the acid value of the pigment dispersion resin d is obtained by the measurement according to JIS K 0070: 1992 (Test methods for acid value, saponification value, ester value, iodine value, hydroxyl value and unsaponifiable matter of chemical products).

The pigment dispersion resin d favorably has a mass average molecular weight (Mw) of 3000 or more and 180000 or less, more favorably 5000 or more and 15000 or less. By setting the mass average molecular weight of the pigment dispersion resin d to be within this range, the efficiency of coating the surface of the pigment a is improved, and the pigment dispersion liquid and the ink are easily maintained at appropriate viscosity. The mass average molecular weight of the pigment dispersion resin d is obtained by measurement using gel permeation chromatography ("HLC-8020GPC" manufactured by TOSOH CORPORATION) in accordance with the following conditions.

Column: "TSKgel SuperMultiporeHZ-H" manufactured by TOSOH CORPORATION (semi-microcolumn of 4.6 mm I.D. × 15 cm)
Number of columns: 3
Eluent: tetrahydrofuran
Flow rate: 0.35 mL/min
Sample injection amount: 10 μL
Measurement temperature: 40°C
Detector: IR detector

Note that the calibration curve is created by selecting seven types, i.e., F-40, F-20, F-4, F-1, A-5000, A-2500, and A-1000, and n-propylbenzene from TSK gel standard polystyrene manufactured by TOSOH CORPORATION.

Further, in the ink according to this embodiment, a specific resin having a cross-linked structure in which the pigment dispersion resin d is cross-linked by a cross-linking agent on the surface of the pigment a may be formed. That is, in the ink according to this embodiment, the pigment dispersion may include the pigment a and the specific resin. In the ink according to this embodiment, since the specific resin coating the pigment a has a cross-linked structure, the specific resin is bound to the surface of the pigment a, thereby preventing the specific resin from separating from the surface of the pigment a. In the ink according to this embodiment, since a strong binding force of the specific resin to the surface of the pigment a can be achieved while maintaining the effect of suppressing the agglomeration of the pigment a by the pigment dispersion resin d, the dispersed state of the pigment dispersion is easily maintained.

In the ink according to this embodiment, the specific resin favorably has a cross-linking rate of 30% or more and 90% or less, more favorably 40% or more and 70% or less. In the ink according to this embodiment, by keeping the cross-linking rate of the specific resin at 90% or less, the favorable dispersibility of the pigment dispersion is maintained, and the occurrence of nozzle clogging in the recording head can be suppressed. Further, in the ink according to this embodiment, by setting the cross-linking rate of the specific resin to 30% or more, the effect of suppressing the separation from the surface of the pigment a is favorably achieved.

The cross-linking rate refers to the percentage of the number of moles of repeating units having a cross-linked structure when the total number of moles of repeating units derived from the monomer having a functional group that reacts with the cross-linking agent in the specific resin is 100%. The cross-linking rate of the specific resin according to this embodiment is defined by an apparent cross-linking rate calculated from the equivalent number of moles of carboxy groups of the specific resin and the equivalent number of moles of cross-linked functional groups of the cross-linking agent and is calculated using the following formula.

Cross-linking rate (%) = 100 × (the equivalent number of moles of cross-linked functional groups of the cross-linking agent / the equivalent number of moles of carboxy groups of the specific resin)

The pigment dispersion resin d constituting the specific resin in this embodiment is favorably a styrene-(meth) acrylic acid copolymer. The styrene-(meth)acrylic acid copolymer is a resin including a styrene unit, an α-methyl styrene unit, a (meth)acrylic acid unit, and a nonionic unit. In the styrene-(meth)acrylic acid copolymer, the content of the styrene unit with respect to all repeating units is favorably 1.0 mass% or more and 50.0 mass% or less, more favorably 1.0 mass% or more and 30.0 mass% or less. In the styrene-(meth)acrylic acid copolymer, the content of the $\alpha$-methyl styrene unit with respect to all repeating units is favorably 1.0 mass% or more and 65.0 mass% or less, more favorably 20.0 mass% or more and 65.0 mass% or less. In the styrene-(meth)acrylic acid copolymer, the content of the repeating unit derived from (meth) acrylic acid with respect to all repeating units is favorably 10.0 mass% or more and 40.0 mass% or less. In the styrene-(meth)acrylic acid copolymer, the content of the repeating unit derived from a nonionic monomer with respect to all repeating units is favorably 1.0 mass% or more and 10.0 mass% or less. The nonionic monomer is favorably at least one selected from the group consisting of polyethylene glycol(meth)acrylate (n = 1 to 9) and polypropylene glycol (meth) acrylate (n = 1 to 9).

The cross-linking agent used for cross-linking the pigment dispersion resin d in this embodiment is favorably a cross-linking agent having an epoxy group that reacts with the carboxy group of the pigment dispersion resin d. The epoxy group-containing cross-linking agent favorably has two or more epoxy groups, more favorably three or more epoxy groups, in its molecule. Further, the epoxy group-containing cross-linking agent favorably has a hydroxy group. The epoxy group-containing cross-linking agent is favorably water-soluble, and favorably has water solubility of 80% or more (water solubility is calculated as the mass of the dissolved epoxy compound when 10 g of the epoxy compound is mixed with 90 g of water), more favorably 100%.

Examples of the cross-linking agent that can be used for cross-linking the pigment dispersion resin d in the ink according to this embodiment include sorbitol polyglycidylether, glycerol polyglycidylether, diglycerol polyglycidylether, and polyglycerol polyglycidylether. Further, examples of the product of the cross-linking agent that can be used for cross-linking the pigment dispersion resin d in the ink according to this embodiment include DENACOL (registered trademark) EX-614B, DENACOL (registered trademark) EX-313, DENACOL (registered trademark) EX-421, DENACOL (registered trademark) EX-512, and DENACOL (registered trademark) EX-521, which are cross-linking agents manufactured by Nagase ChemteX Corporation.

In the ink according to this embodiment, the epoxy equivalent (g/eq.) of the cross-linking agent used for cross-linking the pigment dispersion resin d is favorably 100 or more and 10000 or less, more favorably 120 or more and 250 or less, from the viewpoint of causing it to efficiently react with the carboxy group of the pigment dispersion resin d to enhance the dispersion stability of the pigment dispersion. When the amount of epoxy groups in the cross-linking agent is too large, the cross-linking does not efficiently progress, and the epoxy groups act as water-soluble groups instead in some cases. Further, when the amount of epoxy groups in the cross-linking agent is too small, the cross-linking points are insufficient, resulting in insufficient suppression of the separation of the specific resin from the surface of the pigment a. The epoxy group-containing cross-linking agent favorably has a mass average molecular weight of 100 or more and 1500 or less from the viewpoints of ease of reaction and preservation stability of the aqueous pigment dispersion.

In the ink according to this embodiment, the content of the pigment dispersion is favorably 5.0 mass% or more and 30.0 mass% or less, more favorably 8.0 mass% or more and 15.0 mass% or less. In the ink according to this embodiment, by setting the content of the pigment dispersion to 5.0 mass% or more, an image having favorable image density is easily formed on a recording medium. Further, in the ink according to this embodiment, by keeping the content of the pigment dispersion at 30.0 mass% or less, sufficient fluidity as an ink is easily achieved.

In the ink according to this embodiment, the content of the specific resin is favorably 0.5 mass% or more and 10.0 mass% or less, more favorably 2.0 mass% or more and 4.0 mass% or less. In the pigment dispersion, the content of the specific resin is favorably 10 mass% or more and 50 mass% or less, more favorably 20 mass% or more and 30 mass% or less. Further, in the pigment dispersion, the total content of the pigment a and the specific resin is favorably 90 mass% or more, more favorably 100 mass%. In the ink according to this embodiment, the pigment dispersion including the specific resin favorably has a volume median diameter of 30 nm or more and 200 nm or less, more favorably 80 nm or more and 140 nm or less, from the viewpoint of optimizing color density, hue, or stability.

(Water)

In the ink according to this embodiment, ion exchanged water, purified water, distilled water, or the like can be used as water. In the ink according to this embodiment, the content of water is favorably 25.0 mass% or more and 80.0 mass% or less, more favorably 35.0 mass% or more and 60.0 mass% or less, from the viewpoints of dryness and ejection reliability.

(Other components)

In the ink according to this embodiment, components other than the above may be blended as necessary. The surfactant is capable of optimizing the permeability (wettability) of the ink according to the present disclosure on a recording medium. Examples of the surfactant that can be used in the ink according to this embodiment include an anionic surfactant, a cationic surfactant, and a nonionic surfactant. As the surfactant, a nonionic surfactant is favorable. Examples of the nonionic surfactant include polyoxyethylene dodecylether, polyoxyethylene hexadecylether, polyoxyethylene nonylphenylether, polyoxyethylene sorbitan monooleate ether, monodecanoyl sucrose, and an ethylene oxide adduct of acetylene glycol. As the nonionic surfactant, an ethylene oxide adduct of acetylene glycol is favorable.

Further, in addition to the surfactant, various additives such as a dissolution stabilizer, an antioxidant, a viscosity adjustor, a pH adjuster, an antifungal agent may be blended as necessary in the ink according to this embodiment.

[Method of producing inkjet ink]

(Introduction)

An example of the method of producing the ink according to this embodiment will be described. An example in which the pigment dispersion resin d constitutes a specific resin having a cross-linked structure will be described below. The method of producing the ink according to this embodiment includes a dispersion step, a cross-linking step, a centrifuging step, and an ink preparation step. Note that in the method of producing the ink according to this embodiment, the centrifuging step may be omitted. Each step of the method of producing the ink according to this embodiment will be described below.

(Dispersion step)

In the dispersion step, dispersion treatment in which the pigment a and the pigment dispersion resin d are dispersed in water is performed to prepare a pigment dispersion liquid prior to cross-linking the pigment dispersion resin d (in this example, referred to as an "intermediate pigment dispersion liquid" in order to distinguish it from the pigment dispersion liquid after cross-linking). In the intermediate pigment dispersion liquid, a pigment dispersion that includes the pigment a and the pigment dispersion resin d adsorbed on the surface of the pigment a is dispersed in water. Examples of the dispersing apparatus to be used for dispersion include a wet dispersing apparatus such as a media disperser. The pigment dispersion resin d used in the dispersion step is favorably subjected to neutralization treatment with a basic compound (e.g., KOH or NaOH) in advance such that a predetermined neutralization rate is achieved.

In the intermediate pigment dispersion liquid, the content of the pigment dispersion resin d is favorably 4.0 mass% or more and 25.0 mass% or less. Further, in the intermediate pigment dispersion liquid, the content of the pigment a is favorably 1.0 mass% or more and 30.0 mass% or less. In the dispersion step, an antifoaming agent may be blended in the intermediate pigment dispersion liquid. In the intermediate pigment dispersion liquid, the content of the antifoaming agent is favorably 0.01 mass% or more and 0.1 mass% or less.

In the dispersion step, it is favorable to filter the intermediate pigment dispersion liquid using a filter (e.g., a pore size of 5 μm) to remove coarse particles.

(Cross-linking step)

In the cross-linking step, an epoxy group-containing cross-linking agent is added to the intermediate pigment dispersion liquid obtained by the dispersion step. This causes the carboxy group of the pigment dispersion resin d adsorbed on the surface of the pigment a and the epoxy group of the cross-linking agent to react with each other, and cross-links the pigment dispersion resin d on the surface of the pigment a, thereby obtaining the pigment dispersion liquid according to this embodiment. In the cross-linking step, it is favorable to stir, after adding a cross-linking agent to the intermediate pigment dispersion liquid, the intermediate pigment dispersion liquid while heating. The heating temperature can be, for example, 50°C or more and 95°C or less. The heating time can be, for example, 30 minutes or more and 8 hours or less.

(Centrifuging step)

In the centrifuging step, centrifugal treatment is applied to the pigment dispersion liquid obtained by the cross-linking step, and the supernatant liquid of the pigment dispersion liquid after centrifugal treatment is substituted with water. As a result, in the centrifuging step, the components that have been free in water in the pigment dispersion liquid can be removed. The centrifugal treatment conditions in the centrifuging step can be, for example, a rotational speed of 10000 rpm or more and 100000 rpm or less and a centrifugal treatment time of 12 hours or more and 48 hours or less.

(Ink preparation step)

In the ink preparation step, the water-soluble organic solvent b, the moisturizing agent c, and water are added to the pigment dispersion liquid obtained by the centrifuging step. In this way, the ink according to this embodiment is obtained. Note that in the ink preparation step, a component (more specifically, at least one of a surfactant, a dissolution stabilizer, a penetrating agent, a viscosity adjustor, or the like) other than the water-soluble organic solvent b, the moisturizing agent c, and water may be further added as necessary. In the ink preparation step, it is favorable to stir the obtained ink with a stirrer. Further, in the ink preparation step, foreign substances and coarse particles may be removed from the obtained ink using a filter (e.g., a filter having a pore size of 5 $\mu$m or less).

[Examples and Comparative Examples]

Inks were prepared and evaluated as Examples and Comparative Examples of the present disclosure. Note that the following Examples are merely examples of the present disclosure, and the configuration of the present disclosure is not limited to those in Examples.

(Preparation of ink according to Example 1)

·Synthesis of pigment dispersion resin d

First, a styrene-acrylic acid copolymer was synthesized as the pigment dispersion resin d. 100.0 g of isopropyl alcohol and 250.0 g of methyl ethyl ketone were added to a four-necked flask (capacity: 1000 mL) equipped with a stirrer, a nitrogen introduction tube, a condenser, and a dropping funnel. A mixed solution was supplied to the dropping funnel. The mixed solution included 20.0 g of styrene, 40.0 g of $\alpha$-methylstyrene, 5.0 g of ethylene glycol acrylate, 25.0 g of methacrylic acid, and 0.3 g of azobisisobutyronitrile (AIBN, a polymerization initiator).
Nitrogen was introduced into the flask and heated to reflux at 70°C. While being heated to reflux at 70°C, the above-mentioned mixed solution was supplied to the flask from the dropping funnel over approximately 2 hours. After the mixed solution was supplied, the mixture was heated to reflux at 70°C for 6 hours. After that, a methyl ethyl ketone solution was supplied to the flask from the dropping funnel over 15 minutes. The methyl ethyl ketone solution included 150.0 g of methyl ethyl ketone and 0.1 g of AIBN. After the methyl ethyl ketone solution was supplied, the mixture was heated to reflux at 70°C for 5 hours. Next, the content of the reaction vessel was subjected to reduction of pressure to remove the solvent. In this way, a styrene-acrylic acid copolymer was obtained.

·Dispersion treatment

Next, an intermediate pigment dispersion liquid prior to cross-linking a styrene-acrylic acid dispersion resin was prepared. The styrene-acrylic acid dispersion resin was neutralized with potassium hydroxide in advance and used as an aqueous solution having a neutralization rate of 60% and a solid content of 30%. 18.0 parts by mass of carbon black ("Printex (registered trademark) 80" manufactured by Orion Engineered Carbons S.A.) as the pigment a, 7.4 parts by mass (solid content equivalent) of a styrene-acrylic acid dispersion resin, 0.1 part by mass of an antifoaming agent ("SN-DEFOAMER 1340" manufactured by SAN NOPCO LIMITED), and ion exchanged water were mixed to obtain 100 parts by mass of a mixture.
The obtained mixture was subjected to dispersion treatment for 4 hours using a bead mill ("DYNO (registered trademark)-MILL" manufactured by Willy A Bachofen AG) to obtain an intermediate pigment dispersion liquid. In the dispersion treatment, zirconia beads (diameter of 0.5 mm) were used as media. Further, in the dispersion treatment, the filling rate of the media in the vessel of the bead mill was 60% by volume. Further, in the dispersion treatment, the treatment temperature (chiller temperature) was set to 10°C. After the dispersion treatment, the media were removed, and then, the obtained intermediate pigment dispersion liquid was filtered using a filter having a pore size of 5 $\mu$m to remove foreign substances and coarse particles.

·Cross-linking treatment

A 1 L three-necked flask equipped with a thermometer and a stirring blade was used as a reaction vessel, and 100 g of a pigment dispersion liquid was added to the reaction vessel. Next, while maintaining the temperature inside the reaction vessel at 30°C using a water bath, a cross-linking agent was added to the reaction vessel and sufficiently stirred. Next, the content of the reaction vessel was stirred for 1 hour at a speed of 150 rpm. "DENACOL (registered trademark) EX-313" manufactured by Nagase ChemteX Corporation was used as the cross-linking agent, and the added amount of the cross-linking agent was 0.98 g. Next, the temperature inside the reaction vessel was raised at a heating rate of 0.5°C/min to 80°C while stirring at 250 rpm. The content of the reaction vessel was stirred at 250 rpm for 4 hours while maintaining the temperature inside the reaction vessel at 80°C. Then, the temperature inside the reaction vessel was cooled until reaching room temperature, thereby obtaining a pigment dispersion liquid.

·Centrifugal treatment

The obtained pigment dispersion liquid was transferred to a predetermined container, and the container was placed in a centrifugal adhesion measurement apparatus ("NS-C100" manufactured by Nano Seeds Corporation). Centrifugal treatment was applied to the pigment dispersion liquid in the container at a rotational speed of 50000 rpm for 24 hours. After the supernatant liquid was removed from the container, ion exchanged water having the same volume as that of the removed supernatant liquid was added to the container (substitution treatment). In this way, the components that had been free in water were removed from the pigment dispersion liquid.

·Preparation of ink

50.0 mass% of a pigment dispersion liquid, 5.0 mass% of trimethylolpropane, 15.0 mass% of 3-methyl-1,5-pentanediol, 15.0 mass% of triethylene glycol monobutyl ether, 0.3 mass% of a nonionic surfactant ("OLFINE 1004" manufactured by Nissin Chemical Co., Ltd.), and ion exchanged water (remaining amount) were stirred at a rotational speed of 400 rpm using a stirrer ("Three-One Motor BL-600" manufactured by Shinto Scientific Co., Ltd.) to obtain an ink. The obtained ink was filtered using a filter (pore size: 5 μm).

(Evaluation of ink)

For the inks according to Examples and Comparative Examples, nozzle clogging was evaluated. In the evaluation of nozzle clogging, A4-size inkjet matte paper ("Super Fine Paper " manufactured by Seiko Epson Corp.) was used as evaluation paper. An image forming apparatus (a line head-mounted inkjet recording apparatus, a tester manufactured by KYOCERA Document Solutions Inc.) was used as an evaluation device. A 150 mm × 200 mm solid image was continuously printed on 100 sheets of evaluation paper by the evaluation device.

Next, the ink was purged from the recording head of the evaluation device, and then cleaning treatment was applied to the recording head by wiping the ejection surface of the recording head of the evaluation device. After that, a nozzle check pattern image was formed on evaluation paper using the evaluation device, and it was confirmed that ink was ejected from all nozzles. The cleaning treatment was applied to the recording head again, and then, the evaluation device was allowed to stand for 7 days with the recording head uncapped.

Next, the cleaning treatment was applied to the recording head again, and then, a nozzle check pattern image was formed on evaluation paper using the evaluation device. This nozzle check pattern image was checked, and the ratio of the number of non-ejection nozzles to all nozzles (7968) was calculated. The calculated ratio of the number of non-ejection nozzles was used as an evaluation value for nozzle clogging.

Using the evaluation value, evaluation was performed in accordance with the following criteria A and B. Inks with the evaluation of A for nozzle clogging are evaluated to "Pass", and inks with the evaluation of B are evaluated to "Fail".

A: less than 10%

B: 10% or more

(Examples 1 to 8)

The compositions of the pigment a, the water-soluble organic solvent b, and the moisturizing agent c in the inks according to Examples 1 to 8 are shown in Table 1. Note that the units of the numerical values shown in Table 1 are "mass%". In Examples 2 to 8, inks were prepared in the same manner as that in the method of preparing the ink according to Example 1 such that the compositions of the pigment a, the water-soluble organic solvent b, and the moisturizing agent c shown in Table 1 were achieved.

(Table 1)

| | | Example | | | | | | | |
|---|---|---|---|---|---|---|---|---|---|
| | | 1 | 2 | 3 | 4 | 5 | 6 | 7 | 8 |
| Pigment a | Printex80 | 9 | | | | 9 | 9 | 9 | 9 |
| | ECB-301 | | 4 | | | | | | |
| | RGT | | | 7 | | | | | |
| | 5GX01 | | | | 6 | | | | |

(continued)

| | | Example | | | | | | | |
|---|---|---|---|---|---|---|---|---|---|
| | | 1 | 2 | 3 | 4 | 5 | 6 | 7 | 8 |
| Organic solvent b | MPD | 15 | 22.5 | 15 | 20 | 16 | 12 | 10 | 10 |
| | BTG | 15 | 7.5 | 15 | 10 | 4 | 28 | 5 | 35 |
| Moisturizing agent c | TMP | 5 | 5 | 5 | 5 | 5 | 5 | 5 | 5 |

In Example 2, phthalocyanine blue ("ECB-301" manufactured by Dainichiseika Color & Chemicals Mfg. Co., Ltd.) was used as the pigment a. In Example 3, quinacridone magenta ("FASTROGEN (registered trademark) Super Magenta RGT" manufactured by DIC CORPORATION) was used as the pigment a. In Example 4, monoazo yellow ("Hansa (registered trademark) Brilliant Yellow 5GX01" manufactured by Clariant) was used as the pigment a. In Examples 5 to 8, carbon black ("Printex (registered trademark) 80" manufactured by Orion Engineered Carbons S.A.) was used as the pigment a.

In all of Examples 1 to 8, 3-methyl-1,5-pentanediol (MPD) and triethylene glycol monobutyl ether (BTG) were used as the water-soluble organic solvent b, and trimethylolpropane (TMP) was used as the moisturizing agent c.

For the inks according to Examples 1 to 8, nozzle clogging was evaluated. Table 2 shows the evaluation results of nozzle clogging for the inks according to Examples 1 to 8. In all of the inks according to Examples 1 to 8, nozzle clogging was evaluated to "Pass".

(Table 2)

| | | Nozzle clogging | |
|---|---|---|---|
| | | Evaluation value | Evaluation |
| Example | 1 | 0 | A |
| | 2 | 2 | A |
| | 3 | 7 | A |
| | 4 | 6 | A |
| | 5 | 1 | A |
| | 6 | 7 | A |
| | 7 | 8 | A |
| | 8 | 9 | A |

(Comparative Examples 1 to 3)

The compositions of the pigment a, the water-soluble organic solvent b, and the moisturizing agent c in the inks according to Comparative Examples 1 to 3 are shown in Table 3. Note that the units of the numerical values shown in Table 3 are "mass%". In Comparative Examples 1 to 3, the inks were prepared in the same manner as that in the method of preparing the ink according to Example 1 such that the compositions of the pigment a, the water-soluble organic solvent b, and the moisturizing agent c shown in Table 3 were achieved.

(Table 3)

| | | Comparative Example | | |
|---|---|---|---|---|
| | | 1 | 2 | 3 |
| Pigment a | Printex80 | 9 | 9 | 9 |
| Organic solvent b | MPD | 10 | | 15 |
| | BTG | 15 | 15 | |
| | PG | | 15 | |
| | EG | | | 15 |

(continued)

| | | Comparative Example | | |
|---|---|---|---|---|
| | | 1 | 2 | 3 |
| Moisturizing agent c | TMP | | 5 | 5 |
| | Gly | 5 | | |

In all of Comparative Examples 1 to 3, carbon black ("Printex (registered trademark) 80" manufactured by Orion Engineered Carbons S.A.) was used as the pigment a. The ink according to Comparative Example 1 is different from the inks according to the above Examples in that glycerin (Gly) was used as the moisturizing agent c instead of trimethylolpropane (TMP). The ink according to Comparative Example 2 is different from the inks according to the above Examples in that propylene glycol (PG) was used as the water-soluble organic solvent b instead of 3-methyl-1,5-pentanediol (MPD). The ink according to Comparative Example 3 is different from the inks according to the above Examples in that diethylene glycol monoethyl ether (EG) was used as the water-soluble organic solvent b instead of triethylene glycol monobutyl ether (BTG).

For the inks according to Comparative Examples 1 to 3, nozzle clogging was evaluated. Table 4 shows the evaluation results of nozzle clogging for the inks according to Comparative Examples 1 to 3. In all of the inks according to Comparative Examples 1 to 3, nozzle clogging was evaluated to "Fail".

(Table 4)

| | | Nozzle clogging | |
|---|---|---|---|
| | | Evaluation value | Evaluation |
| Comparative Example | 1 | 13 | B |
| | 2 | 15 | B |
| | 3 | 18 | B |

**Claims**

1. An inkjet ink, comprising:

   a pigment;
   3-methyl-1,5-pentanediol;
   triethylene glycol monobutyl ether;
   trimethylolpropane;
   a pigment dispersion resin; and
   water.

2. The inkjet ink according to claim 1, wherein
   a sum of a content of 3-methyl-1,5-pentanediol and a content of triethylene glycol monobutyl ether is 20 mass% or more and 40 mass% or less.

3. The inkjet ink according to claim 1 or 2, wherein
   the pigment dispersion resin is cross-linked on a surface of the pigment.

Europäisches
Patentamt

European
Patent Office

Office européen
des brevets

# EUROPEAN SEARCH REPORT

**Application Number**

EP 25 20 6796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2000 265096 A (HITACHI MAXELL)<br>26 September 2000 (2000-09-26)<br>* examples * | 1-3 | INV.<br>C09D11/38<br>C09D11/322<br>C09D11/326<br>C09D11/107 |
| A | EP 2 390 290 B1 (SEIKO EPSON CORP [JP])<br>16 November 2016 (2016-11-16)<br>* examples; tables * | 1-3 | |
| A | US 2013/066006 A1 (MIYAJIMA YOSHITAKA [JP]) 14 March 2013 (2013-03-14)<br>* examples; tables * | 1-3 | |
| A | EP 2 173 558 B1 (CANON KK [JP])<br>3 July 2019 (2019-07-03)<br>* examples * | 1-3 | |

**TECHNICAL FIELDS SEARCHED (IPC)**

C09D

The present search report has been drawn up for all claims

| Place of search | Date of completion of the search | Examiner |
|---|---|---|
| Munich | 19 February 2026 | Schmitz, Volker |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 6796

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2026

| Patent document cited in search report | Publication date | Patent family member(s) | Publication date |
|---|---|---|---|
| JP 2000265096 A | 26-09-2000 | NONE | |
| EP 2390290 B1 | 16-11-2016 | CN 102277037 A | 14-12-2011 |
| | | EP 2390290 A1 | 30-11-2011 |
| | | US 2011292113 A1 | 01-12-2011 |
| US 2013066006 A1 | 14-03-2013 | JP 2013060513 A | 04-04-2013 |
| | | US 2013066006 A1 | 14-03-2013 |
| EP 2173558 B1 | 03-07-2019 | EP 2173558 A1 | 14-04-2010 |
| | | JP 5241365 B2 | 17-07-2013 |
| | | JP 2009220553 A | 01-10-2009 |
| | | US 2010214351 A1 | 26-08-2010 |
| | | WO 2009014241 A1 | 29-01-2009 |

EPO FORM P0459

For more details about this annex : see Official Journal of the European Patent Office, No. 12/82

**EP 4 722 311 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019001907 A
- JP 2019019161 A
- JP 2022153876 A